# EUROPEAN PATENT APPLICATION

(11) **EP 2 626 651 A1**
(43) Date of publication of application: **14.08.2013**
(21) Application number: 12425024.2
(22) Date of filing: 07.02.2012
(51) Int. Cl.: F24J 2/52, H01L 31/042, H01L 31/048

(54) **Photovoltaic plant**

(71) Applicant: Carini, Pierluigi, 24030 Terno D'Isola (BG) (IT)
(72) Inventor: Carini, Pierluigi, 24030 Terno D'Isola (BG) (IT)
(74) Representative: Gatti, Enrico

(57) **Abstract**

An architecturally integrated photovoltaic plant comprising: a plurality of frameless photovoltaic panels (11) and means for fixing said plurality of photovoltaic panels onto a surface. Said fixing means comprise a longitudinal first profile (12) and a transverse second profile (13) to be joined together at an angle of 90°; said first profile (12) and said second profile (13) being fixed onto a surface to support said plurality of photovoltaic panels (11); said first profile (12) comprising first lateral base flanges for fixing said profile (12) onto said surface; second lateral upper flanges on which said plurality of photovoltaic panels (11) rest; first upper counter-flanges fixable centrally to said second upper flanges, to oppose said second upper flanges; said plurality of photovoltaic panels (11) being positioned between said second lateral upper flanges and said upper counter-flanges; said second profile (13) comprising third lateral flanges on which said plurality of photovoltaic panels (11) rest; second upper counter-flanges, fixable centrally to said third flanges, to oppose said third flanges; said second profile (13) being joined to said first profile (12) to rest on flanges (30).

## Description

The present invention relates to a photovoltaic plant, in particular to a structure for mounting an architecturally integrated photovoltaic plant.

A photovoltaic plant is considered architecturally integrated when the various modules replace the cladding materials of roofs, coverings, and building facades, and hence have the same inclination and architectural functionality.

To mount integrated photovoltaic plants on the surface of a dwelling, it is normally necessary to use special components often constructed for the occasion.

An object of the present invention is to provide a structure for mounting an architecturally integrated photovoltaic plant which is of simple implementation.

Further objects are to provide a structure which both facilitates assembly and is modular.

Another object is to provide a structure which enables the photovoltaic plant to achieve higher efficiency than that of the known art.

These and other objects are attained according to the present invention by an architecturally integrated photovoltaic plant comprising: a plurality of frameless photovoltaic panels; and means for fixing said plurality of photovoltaic panels onto a surface; **characterised in that** said fixing means comprise a longitudinal first profile and a transverse second profile to be joined together at an angle of 90°; said first profile and said second profile being fixed onto a surface to support said plurality of photovoltaic panels; said first profile comprising first lateral base flanges for fixing said profile onto said surface; second lateral upper flanges on which said plurality of photovoltaic panels rest; first upper counter-flanges fixable centrally to said second upper flanges, to oppose said second upper flanges; said plurality of photovoltaic panels being positioned between said second lateral upper flanges and said upper counter-flanges; said second profile comprising third lateral flanges on which said plurality of photovoltaic panels rest; second upper counter-flanges, fixable centrally to said third flanges, to oppose said third flanges; said second profile being joined to said first profile to rest on said second upper flanges. Further characteristics of the invention are described in the dependent claims.

This solution has various advantages over the solutions of the known art.

The photovoltaic roof according to the present invention consists of a unique building product which both produces electrical energy while at the same time providing a building covering which is water-tight and mechanically comparable to coverings of the known art.

The panel support structure formed from two profile types facilitates mounting and ensures water tightness.

The ventilation with heat extraction considerably improves the photovoltaic panel efficiency and also ensures air recirculation through the small under-roof which is created below the panels, and reduces the temperature of the building.

The mounting structure enables the single equipment casing to be assembled in the workshop and be brought directly onto its place of installation, or to be mounted directly on site.

The characteristics and advantages of the present invention will be apparent from the ensuing detailed description of a practical embodiment thereof, illustrated by way of non-limiting example in the accompanying drawings, in which:

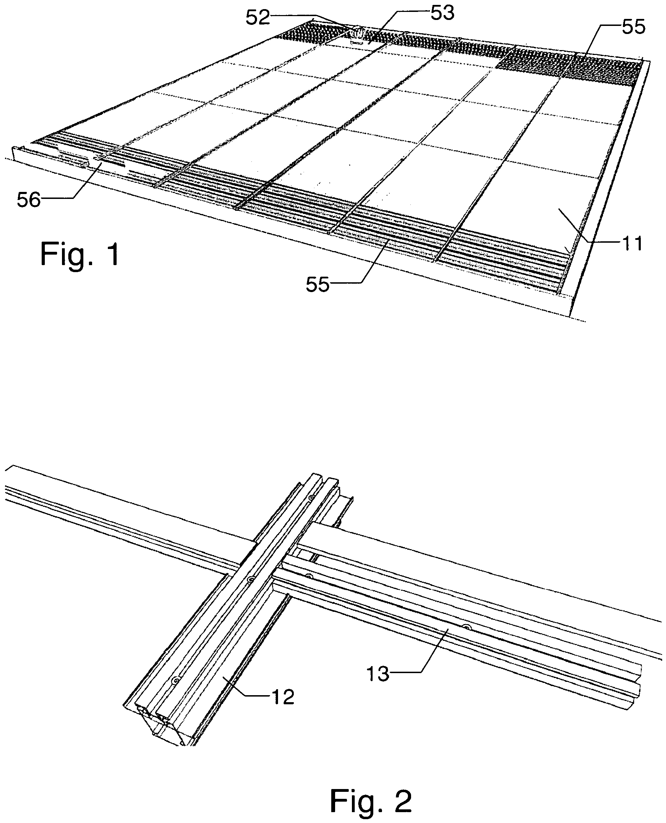

Figure 1 shows a photovoltaic plant in accordance with the present invention;
Figure 2 shows a first partial view of the mounting structure for a photovoltaic plant, in accordance with the present invention;

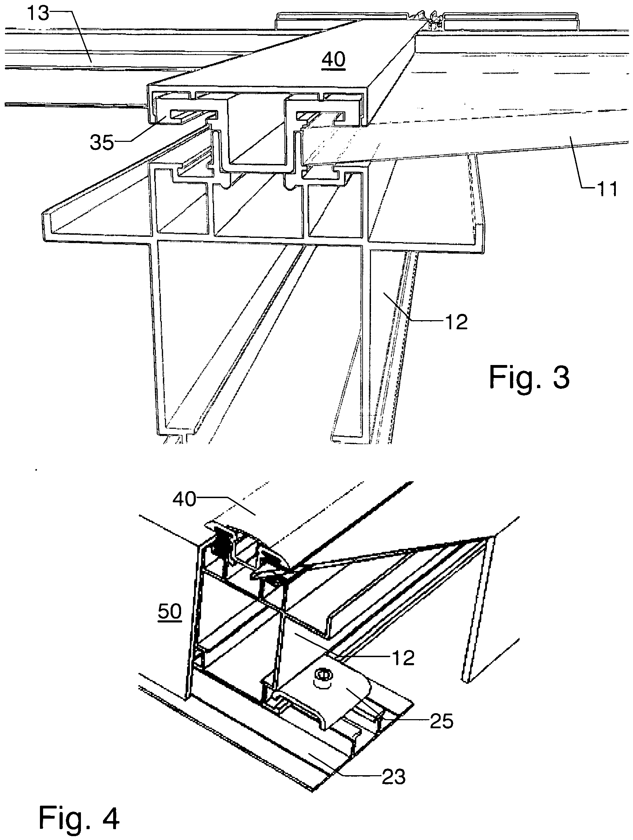

Figure 3 shows a second partial view of the mounting structure for a photovoltaic plant including the photovoltaic panel, in accordance with the present invention;
Figure 4 shows a third partial view of the mounting structure for a photovoltaic plant and of its fixing to the roof, in accordance with the present invention;

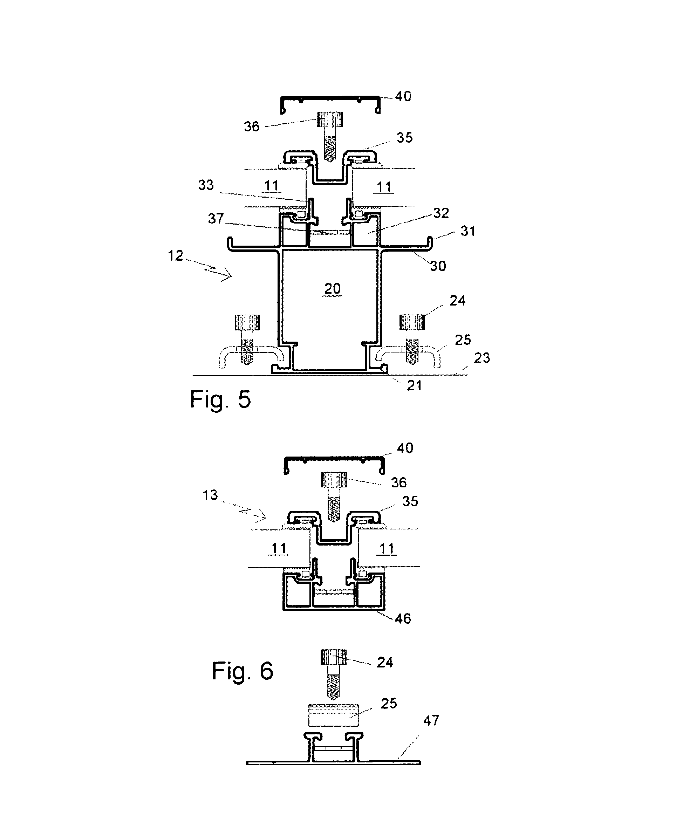

Figure 5 shows a section through a first profile of the mounting structure for a photovoltaic plant, in accordance with the present invention;
Figure 6 shows a section through a second profile of the mounting structure for a photovoltaic plant, in accordance with the present invention;

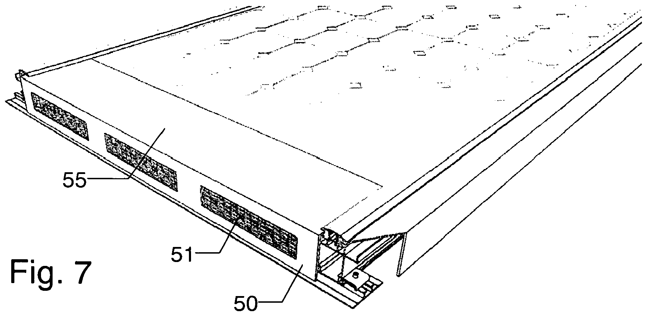

Figure 7 shows a photovoltaic plant including the front aeration apertures, in accordance with the present invention.

With reference to the accompanying figures, a structure for mounting an architecturally integrated photovoltaic plant, in accordance with the present invention, comprises a plurality of photovoltaic panels 11 of the frameless type. The mounting structure for the photovoltaic panels 11 comprises a first profile 12, positioned preferably longitudinally, and a second profile 13, positioned preferably transversely, crossing the first profile 12.

The first profile 12 comprises a base profile 20 of substantially rectangular shape essentially nearly defining the height of the first profile 12. The base profile 20 presents, extending laterally at its base for its entire length, two recesses 21 which form the lateral feed used to fix the first profile 12 either directly to the surface which it is to cover, or to another support profile 23 fixed to the roof surface.

The first profile 12 is fixed to the surface or to the support profile 23 by screws 24 and clips 25 which retain the foot of the recesses 21 against the surface or against the support profile 23.

Two flanges 30 extend laterally from the upper surface of the base profile 20 along the entire length of the first profile 12, and terminate with a turn-up 31.

On the upper surface of the base profile 20 there are also positioned two square profiles 32, the outer side of which is aligned with the lateral surfaces of the base profile 20. The inner lateral side of the two profiles 32 comprises an upward extension 33.

The first profile 12 also comprises a third profile 35 of seagull wing shape, to lock the photovoltaic panels 11 against the two lateral profiles 31. Specifically, it has a U-shaped central part which inserts between the two profiles 32, and lateral flanges which upperly retain the photovoltaic panels 11. A screw 36 locks the third profile 35 by screwing into the base profile 20, or preferably into a bar 37 positioned on the upper surface of the base profile 20 and joined to the inner walls of the two lateral profiles 32.

Preferably, the entire assembly is closed by a fourth (closure) profile 40 which fits above the third profile 35 and covers the screws 36.

The lateral edges of the photovoltaic panels 11 are contained vertically between the upper surface of the profiles 30 and the lower surface of the flanges of the third profile 35 and abut against the extensions 33 of the two profiles 32.

The first profile 12 comprises gaskets to make it waterproof. One gasket is positioned below the flanges of the third profile 35 and one gasket is positioned on the upper surface of the two profiles 30. Gaskets are positioned in particular where the metal of the profiles comes into contact with the photovoltaic panel, both to protect it and to provide water-tightness.

In those zones where the gaskets are positioned, the profiles present seats which cooperate with suitable shapes in the gaskets to improve their connection, which is done by insertion and with the aid of adhesives.

The two flanges 30 terminating with a turn-up 31 serve not only to support the photovoltaic panels but also to collect any water droplets which may infiltrate below the photovoltaic panels.

The second profile 13 intersects at 90° with the first profile 12 and rests on it. The first profile 12 ensures longitudinal support to the solar panels while the second profile 13 ensures transverse support.

The second profile 13 comprises part of the elements of the first profile 12, i.e. all those elements 30-37 and 40 required to support the photovoltaic panel, and also comprises a (horizontal) base bar 46 which corresponds to the upper surface of the base profile 20, and supports the elements 30-37 and 40, and rests on and is fixed to the flanges 30 of the first profile 12.

The structure also preferably comprises, associated with the first profile 13, another profile 14 which serves to strengthen the structure. It is positioned below the profile 13, and comprises a bar 47 which is fixed into the support profile 23, fixed to the roof surface by screws 24 and clips 25.

The first profile 12 is sized such that the photovoltaic panels lie at about 20-30 cm above the roof plane. Hence a large-dimension area is formed below the photovoltaic panels. Photovoltaic panels are known to heat up when exposed to the sun, this underlying area serving to cool and mediate the temperature below them. The height can be adapted to requirements by varying the height of the base profile 20.

Advantageously, the mounting structure for a photovoltaic plant, in accordance with the present invention, comprises a panel 50 for closing the front of the photovoltaic panel plant, in particular that area below the photovoltaic panels. Grill apertures 51 are provided in the panel 50 to allow air to enter the area below the photovoltaic panels. This enables air changes to take place and hence a lowering of the temperature.

Moreover, to create an air flow below the photovoltaic panels in the top (rear) of the photovoltaic panel plant, a chimney cap 52 preferably of wind type is positioned to extract the air originating from the apertures 51. The hot air present and the slope of the photovoltaic plant, which follows that of the roof on which it is positioned, facilitates air exit. An electrical extractor, associated with the chimney cap 52, can also be provided to increase the air quantity extracted. In this manner the air flow cools the solar panels, which have a greater efficiency, and maintains the under-roof temperate.

Specifically, the chimney cap 52 is positioned on a dedicated panel 53 fixed to the plant structure by using the first and second profiles 12 and 13.

The panel 53 can be made for example of reinforced metal to make it treadable.

According to the present invention, treadable gangways can be provided transverse to the plant, comprising mutually aligned treadable panels 55 fixed to the plant using the first and second profiles 12 and 13.

Vertical anti-snow plates 56 can be provided on the treadable panels 55.

The photovoltaic plant mounted by means of the structure described herein is architecturally integrated by virtue of forming a sealed covering for a roof.

This structure could indeed be considered as a roof covering by replacing the photovoltaic panels with panels suitable for the purpose, but always fixed to the under-roof in the same manner.

The profiles 12 and 13 are made of aluminium, however in practice the materials used for the mounting structure for an architecturally integrated photovoltaic plant and the dimensions can be chosen at will according to requirements and to the state of the art.

## Claims

1. An architecturally integrated photovoltaic plant comprising: a plurality of frameless photovoltaic panels; and means for fixing said plurality of photovoltaic panels onto a surface; **characterised in that** said fixing means comprise a longitudinal first profile and a transverse second profile to be joined together at an angle of 90°; said first profile and said second profile being fixed onto a surface to support said plurality of photovoltaic panels; said first profile comprising first lateral base flanges for fixing said profile onto said surface; second lateral upper flanges on which said plurality of photovoltaic panels rest; first upper counter-flanges fixable centrally to said second upper flanges, to oppose said second upper flanges; said plurality of photovoltaic panels being positioned between said second lateral upper flanges and said upper counter-flanges; said second profile comprising third lateral flanges on which said plurality of photovoltaic panels rest; second upper counter-flanges, fixable centrally to said third flanges, to oppose said third flanges; said second profile being joined to said first profile to rest on said second upper flanges.

2. A plant as claimed in claim 1, **characterised by** comprising a first cover bar for said first upper counter-flanges.

3. A plant as claimed in claim 1, **characterised by** comprising a second cover bar for said second upper counter-flanges.

4. A plant as claimed in claim 1, **characterised in that** said first upper counter-flanges are fixable centrally to said second upper flanges by a screw which joins said first counter-flanges to said second flanges.

5. A plant as claimed in claim 1, **characterised in that** said second upper counter-flanges are fixable centrally to said third flanges by a screw which joins said second counter-flanges to said third flanges.

6. A plant as claimed in claim 1, **characterised in that** said first lateral base flanges are fixed onto said surface by a clip which is screwed onto said surface.

7. A plant as claimed in claim 1, **characterised by** comprising a front closure panel for said plant; said panel comprising apertures.

8. A plant as claimed in claim 1, **characterised by** comprising a rear aperture in said plant.

9. A plant as claimed in claim 1, **characterised in that** said rear aperture in said plant comprises means for extracting the air below said plurality of photovoltaic panels.

10. A plant as claimed in claim 1, **characterised by** comprising treadable panels fixed to said surface by fixing them to said first profile and said second profile.
